# EUROPEAN PATENT SPECIFICATION

(11) **EP 2 557 026 B1**
(45) Date of publication and mention of the grant of the patent: **30.07.2014**
(21) Application number: 12179337.6
(22) Date of filing: 06.08.2012
(51) Int. Cl.: B62J 35/00, B62K 11/10, B62K 19/46

(54) **Scooter type motorcycle**
Rollerartiges Motorrad
Motocyclette du type scooter

(30) Priority: 11.08.2011 TW 100128673
(43) Date of publication of application: 13.02.2013
(73) Proprietor: Kwang Yang Motor Co., Ltd., Kaohsiung City 80794 (TW)
(72) Inventor: Tsai, Feng-Chih, Cambridge, CB1 1AH (GB)
(74) Representative: Horak, Michael

(56) References cited:
- EP-A1- 1 864 900
- EP-A1- 2 213 560
- JP-A- 11 227 658

## Description

### (a) Technical Field of the Invention

The present invention generally relates to a structure of scooter, and more particularly to a scooter structure that maintain integrity of function of two front storage boxes formed in a knee shield of the scooter.

### (b) Description of the Prior Art

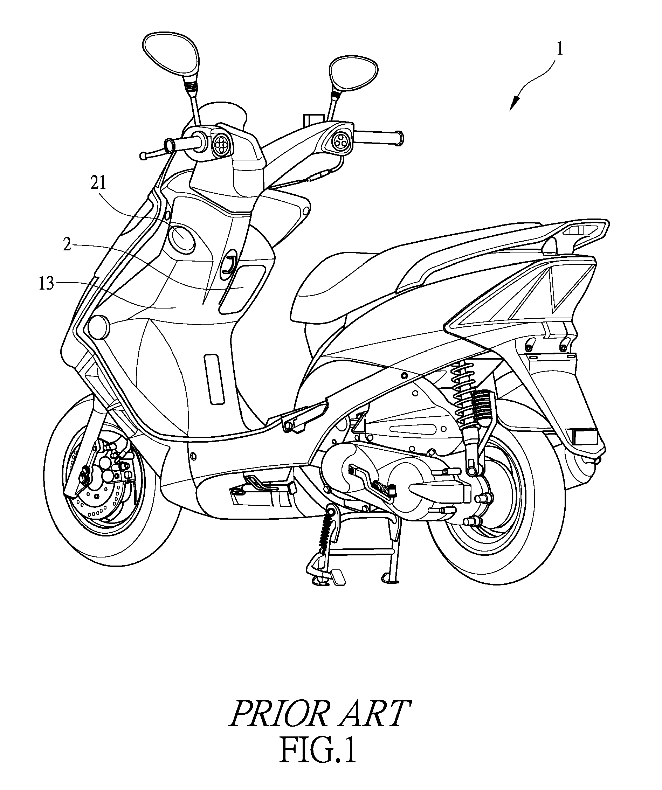

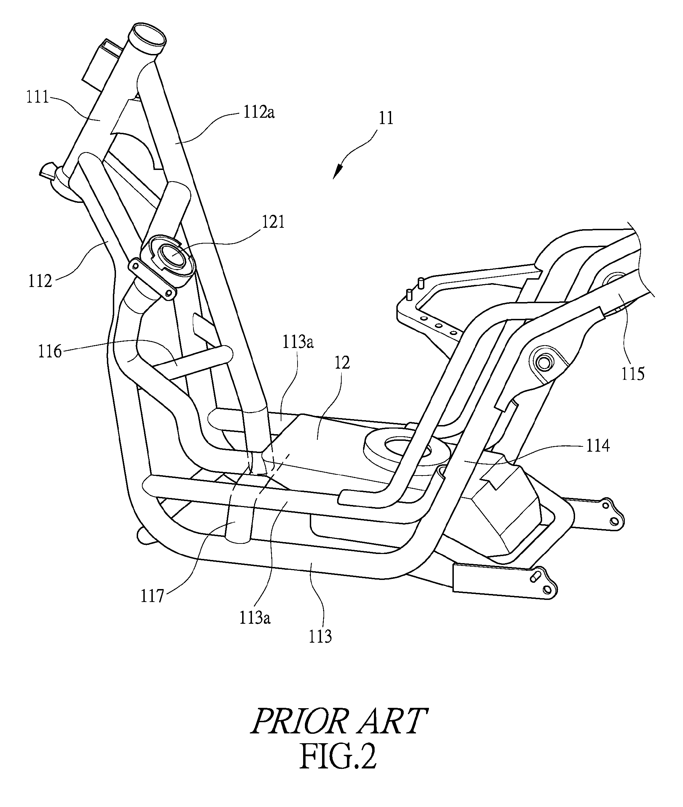

A low-floor scooter 1 is a large scooter among all scooters and is thus of a great weight. Referring to FIG 1, to ensure sound riding safety of the low-floor scooter 1, the low-floor scooter 1 has a frame 11 that is structured as shown in FIG 2. The frame 11 comprises a head tube 111 arranged at a front side thereof. Extending rearward from a lower end of the head tube 111 are down tube sections 112. The down tube sections 112 extend rearward from the head tube 111 along two sides of the scooter body to form horizontal tube sections 113 on which a rider may step. Extending rearward from the horizontal tube sections 113 are rise tube sections 114 and extending rearward from the rise tube sections 114 is a rear frame 115. The low-floor scooter 1 comprises an ancillary down tube 112a at upper rear side of the down tube sections 112 in order to provide the frame 11 with sufficient stiffness and strength. The, the ancillary down tube 112a extends from the head tube 111 to horizontal tube sections 113. Arranged between the ancillary down tube 112a and the down tube sections 112 are first coupling tubes 116 and second coupling tubes 117 for improving stiffness and strength of the frame 11. Further, ancillary horizontal tubes 113a are arranged above the horizontal tube sections 113 and a fuel tank 12 is arranged in the space delimited by the horizontal tube sections 113 and the ancillary horizontal tubes 113a. Since the ancillary down tube 112a is located between the down tube sections 112, a fuel filling opening 121 of the fuel tank 12 has to be set on one of down tube sections 112 at one side of the ancillary down tube 112a.

Also referring to FIG 1, the low-floor scooter 1 arranges the fuel filling opening 121 at one side of the knee shield 13. However, arranging the fuel filling opening 121 at one side of the knee shield 13 would result in that one of the two front storage box 2 that are originally formed at two sides of the knee shield 13 must be eliminated with only the front storage box 2 at the side opposite to the fuel filling opening 121 being left. In the conventional low-floor scooter 1, due to such a structure of the frame 11, the integrity of the front storage boxes 2 of the low-floor scooter 1 is severely damaged and also severe limitation will be imposed on the design of low-floor scooter 1.

In view of the drawbacks found in the structure of scooter frame 11 of a conventional low-floor scooter 1, it becomes a challenge of the industry to provide a frame 11 of a low-floor scooter 1 that eases the design of low-floor scooter 1 and maintain the integrity of the front storage boxes 2.

EP 2213560 A1 discloses a motorcycle comprising a body frame (2) that comprises left and right main tubes (2b, 2b) arranged rearward of left and right down tubes (2c, 2c). The main tubes (2b, 2b) extend rearward to connect to front ends of left and right upper tubes (2d, 2d) and the main tubes (2b, 2b) have upper ends connected to a head pipe (2a). However, EP 2213560 A1 does not teach a transverse branch tube connected between the two main tubes (2b, 2b) and a connection tube which is mounted between the head pipe (2a) and the transverse branch tube.

EP 1864900 A1 discloses a motorcycle that comprises a body frame (2) that comprises tubes connected between a head pipe (3) and upper tubes (24). However, EP 1864900 A1 does not teach a transverse branch tube connected between the tubes and a connection tube which is mounted between the head pipe and the transverse branch tube.

JP 11227658 A discloses a motorcycle having a frame. However, the frame does not comprise a transverse branch tube connected between two ancillary tubes and a connection tube mounted between a head pipe and the transverse branch tube.

### SUMMARY OF THE INVENTION

The technical solution adopted in the present invention is a structure of a scooter type motorcycle that comprises a frame, a front wheel, a seat, front storage boxes, a power unit, a rear wheel, and a cover. The frame comprises a steering handlebar, a head tube, and a front shock absorber. Down tube sections extend rearward from the head tube and two horizontal tube sections extend rearward from the down tube sections and are located at two sides of a scooter body. A fuel tank is arranged between the two horizontal tube sections and has a fuel filling opening. Rise tube sections extend rearward from the horizontal tube sections. The frame comprises ancillary down tubes arranged rearward of the down tube sections, wherein the ancillary down tubes are of a number of two and the ancillary down tubes has upper ends connected to the head tube and the two ancillary down tubes define therebetween a receiving space. The frame further comprises a connection tube that is mounted between the head tube and a transverse branch tube which is connected between the two ancillary down tubes, wherein the down tube sections are connected to the connection tube. The ancillary down tubes are arranged to extend rearward, at two sides of the scooter, so as to be connected to front end section of the horizontal tube sections and the filling opening of the fuel tank is located below the transverse branch tube and is arranged in the receiving space defined by the ancillary down tubes.

The receiving space receives the fuel filling opening of the fuel tank therein so as to allow the two front storage boxes that are formed in the knee shield to maintain an integral function of article storage and thus enhancing the utility of the scooter.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a schematic view showing a conventional low-floor scooter.
FIG 2 is a schematic view showing a frame of the conventional low-floor scooter.
FIG 3 is a side elevational view of a low-floor scooter according to the present invention.
FIG 4 is a perspective view showing a frame of the low-floor scooter according to the present invention.
FIG 5 is a rear view of the frame of the low-floor scooter according to the present invention.
FIG 6 is a schematic view showing the low-floor scooter according to the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

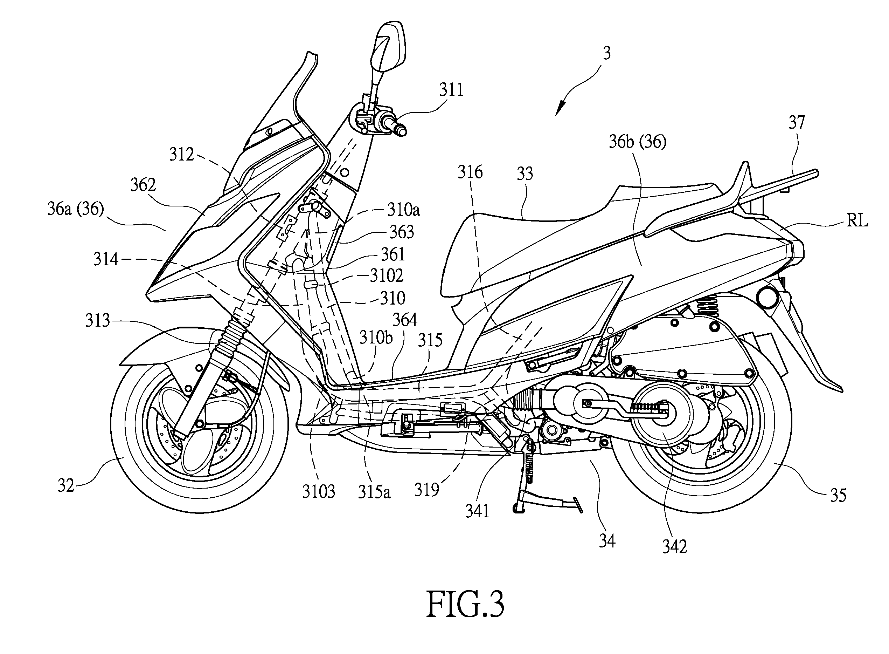

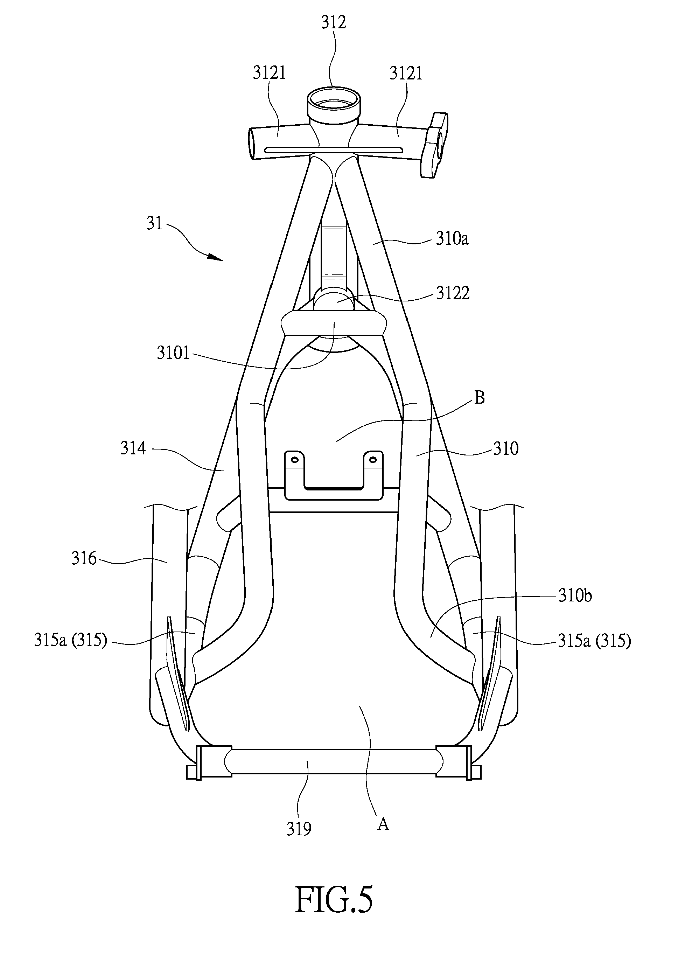

Referring first to FIGS. 3, 4, and 5, the present invention provides a low-floor scooter 3, which comprises a frame 31, a front wheel 32, a seat 33, front storage boxes 363, a power unit 34, a rear wheel 35, and a cover 36.

The frame 31 is rotatably coupled, at front side thereof, to a steering handlebar 311. The steering handlebar 311 has a lower end coupled to a head tube 312. The head tube 312 has an upper end of which left and right sides are respectively provided with coupling tubes 3121 projecting therefrom. The coupling tubes 3121 are provided for a master switch lock or other electrical components (not shown) to attach thereto. Further, the head tube 312 comprises a connection tube 3122 mounted to a lower end of it. The connection tube 3122 is provided for connecting a down tube section 314. The head tube 312 is rotatably coupled, at a lower end thereof, a front shock absorber 313. The front shock absorber 313 is coupled to the front wheel 32. The head tube 312 comprises down tube sections 314 extending rearward from the connection tube 3122. Extending rearward from the down tube sections 314 are horizontal tube sections 315 located at two sides of the scooter body to receive a front foot rest board 364 mounted thereto. Defined between the two horizontal tube sections 315 is a receiving space A and the receiving space A receives therein a fuel tank 4. Extending rearward from the horizontal tube sections 315 are rise tube sections 316. Extending rearward from the rise tube sections 316 is a rear frame 317. Arranged in front of the rear frame 317 is a cross tube 318. Arranged below the cross tube 318 is an engine suspension section 319.

Further, the frame 31 comprises ancillary down tubes 310 arranged between underside of the coupling tube 3121 of the head tube 312 and the down tube sections 314. The ancillary down tubes 310 are of a number of two. Each of the ancillary down tubes 310 has a front end connected to the head tube 312. The ancillary down tubes 310 extend rearward to reach front end sections 315a of the horizontal tube sections 315. The ancillary down tubes 310 have upper sections 3 10a between which a transverse branch tube 3101 is mounted to enhance stiffness and strength of the upper sections 3 10a of the ancillary down tubes 310. Arranged between the ancillary down tubes 310 and the down tube sections 314 are first support tubes 3102 and second support tubes 3103. Ends of lower sections 310b of the ancillary down tubes 310 are curved in a direction outward of two sides of the scooter body and are connected the front end sections 315a of the horizontal tube sections 315. The arrangement of the ancillary down tubes 310 improves stiffness and strength of the frame 31. Further, with the ancillary down tubes 310 extending rearward at two sides of the scooter body, a receiving space B is defined between the two ancillary down tubes 310. More precisely, the ancillary down tubes 310 define the receiving space B between the head tube 312 and the horizontal tube sections 315.

Arranged above the rise tube sections 316 and the rear frame 317 of the frame 31 is the seat 33 on which a rider may sit. The power unit 34 is suspended on the engine suspension section 319. The power unit 34 is coupled to the rear wheel 35.

The power unit 34 comprises at least an injection engine 341 and a transmission box 342.

The cover 36 comprises a front cover member 36a arranged at the front side of the scooter 3 and side cover members 36b. The front cover member 36a comprises a knee shield 361 and a front panel 362. Respectively formed at two opposite side portions of the knee shield 361 are front storage boxes 363 that face rearward. Connected to and extending rearward from a lower end of the knee shield 361 is a front foot rest board 364. Mounted at rear ends of the side cover members36b are a rear light set RL and a rear carriage rack 37.

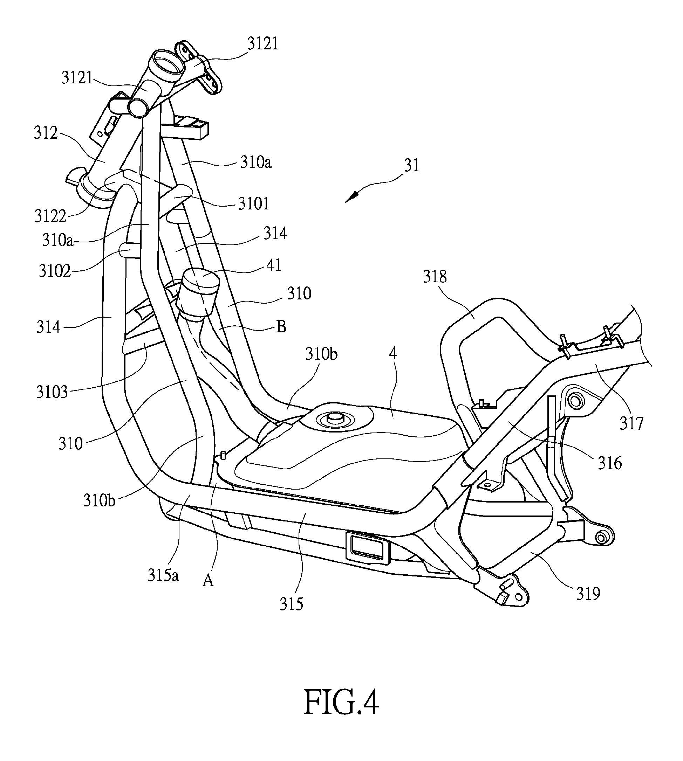

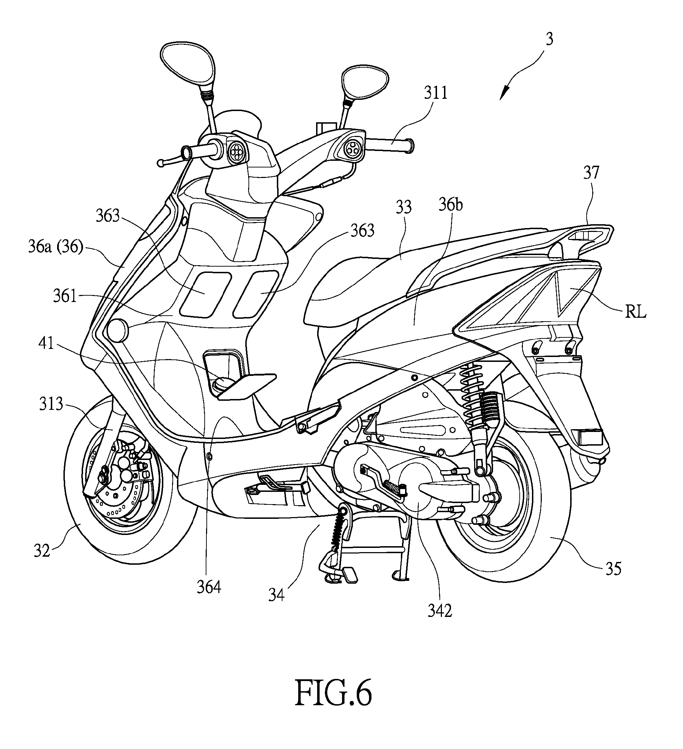

Next, referring to FIGS. 4 and 6, the features of the present invention are such that a fuel tank 4 received in the receiving space A defined between the horizontal tube sections 315 of the frame 31 is arranged to have a fuel filling opening 41 thereof located in the receiving space B defined between the two ancillary down tubes 310 and the location of the fuel filling opening 41 within the receiving space B is lower than the transverse branch tube 3101 between the two ancillary down tubes 310. In other words, the fuel filling opening 41 of the fuel tank 4 is located below the knee shield 361. More precisely, the fuel filling opening 41 of the fuel tank 4 is provided on the knee shield 361 below the two front storage boxes 363 and is arranged on the knee shield 361 to form an inverted triangle with the two front storage boxes 363.

The efficacy of the present invention is that the above described arrangement of the ancillary down tubes 310 defines a receiving space B and the receiving space B receives the fuel filling opening 41 of the fuel tank 4 therein so as to allow the two front storage boxes 363 that are formed in the knee shield 361 to maintain an integral function of article storage and thus enhancing the utility of the low-floor scooter 3. Further, the receiving space B defined between the ancillary down tubes 310 may be used to receive other components so as to further enhance easiness of designing low-floor scooter 3.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the scope of the present invention as defined in the appended claims.

## Claims

1. A structure of a scooter type motorcycle (3), comprising a frame (31), a front wheel (32), a seat (33), front storage boxes (363), a power unit (34), a rear wheel (35), and a cover (36), wherein the frame (31) comprises a steering handlebar (311), a head tube (312), and a front shock absorber (313), down tube sections (314) extending rearward from the head tube (312), two horizontal tube sections (315) extending rearward from the down tube sections (314) and located at two sides of a scooter body, a fuel tank (4) being arranged between the two horizontal tube sections (315) and having a fuel filling opening (41), rise tube sections (316) extending rearward from the horizontal tube sections (315), the frame (31) comprising ancillary down tubes (310) arranged rearward of the down tube sections (314) wherein the ancillary down tubes (310) are of a number of two, the ancillary down tubes (310) having upper ends (3 10a) connected to the head tube (312) and the two ancillary down tubes (310) defining therebetween a receiving space (B);
**characterized in that** the frame (31) further comprises a connection tube (3122) being mounted between the head tube (312) and a transverse branch tube (3101) which is connected between the two ancillary down tubes (310), wherein the down tube sections (314) are connected to the connection tube (3122), the ancillary down tubes (310) being arranged to extend rearward, at two sides of the scooter body, so as to be connected to front end sections (315a) of the horizontal tube sections (315) and the fuel filling opening (41) of the fuel tank (4) is located below the transverse branch tube (3101) and is arranged in the receiving space (B) defined by the ancillary down tubes (310).

2. The structure of a scooter type motorcycle (3) according to claim 1, wherein the head tube (312) has an upper end of which two sides are respectively provided with coupling tubes (3121), which are provided for mounting a master switch lock.

3. The structure of a scooter type motorcycle (3) according to claim 2, wherein the ancillary down tubes (310) are respectively located between undersides of the coupling tubes (3121) of the head tube (312) and the down tube sections (314).

4. The structure of a scooter type motorcycle (3) according to claim 1 or 3, wherein first support tubes (3102) and second support tubes (3103) are mounted between the ancillary down tubes (310) and the down tube sections (314).

5. The structure of a scooter type motorcycle (3) according to claim 1 or 3, wherein the ancillary down tubes (310) have lower sections (310b) the ends of which are curved outward the scooter body and connected to the horizontal tube sections (315).

6. The structure of a scooter type motorcycle (3) according to claim 1, wherein the cover (36) comprises a front cover member (36a) arranged at a front side of the scooter type motorcycle (3) and side cover members (36b), the front cover member (36a) comprising a knee shield (361) and a front panel (362), the knee shield (361) having two side portions respectively forming the front storage boxes (363) to face rearward.

7. The structure of a scooter type motorcycle (3) according to claim 6, wherein the fuel filling opening (41) of the fuel tank (4) is formed in the knee shield (361) to be located below the front storage boxes (363), the fuel filling opening (41) of the fuel tank (4) being arranged on the knee shield (361) to form an inverted triangle with the front storage boxes (363).

8. The structure of a scooter type motorcycle (3) according to claim 1, wherein a rear frame (317) extends rearward from the rise tube sections (316).

## Patentansprüche

1. Struktur eines rollerartigen Motorrads (3) mit einem Rahmen (31), einem Vorderrad (32), einem Sitz (33), vorderen Staukästen (363), einer Antriebseinheit (34), einem Hinterrad (35), und einer Abdeckung (36), wobei der Rahmen (31) eine Lenkstange (311) umfasst, ein Steuerrohr (312), und einen vorderen Stoßdämpfer (313), Unterrohrabschnitte (314), die von dem Steuerrohr (312) nach hinten verlaufen, zwei waagrechte Rohrabschnitte (315) die von den Unterrohrabschnitten (314) nach hinten verlaufen und an zwei Seiten eines Motorradkörpers positioniert sind, wobei ein Kraftstoffbehälter (4) zwischen den beiden waagrechten Rohrabschnitten (315) angeordnet ist und eine Treibstoffeinfüllöffuung (41) umfasst, Steigrohrabschnitte (316) von den waagrechten Rohrabschnitten (315) nach hinten verlaufen, der Rahmen (31) Hilfsunterrohre (310) umfasst, angeordnet hinter den Unterrohrabschnitten (314), wobei die Hilfsunterrohre (310) zwei an der Zahl sind und die Hilfsunterrohre (310) obere Enden (310a) umfassen, die mit dem Steuerrohr (312) und den beiden Hilfsunterrohren (310) verbunden sind, so dass dazwischen ein Aufnahmeraum (B) entsteht;
**gekennzeichnet dadurch, dass** der Rahmen (31) des weiteren ein Verbindungsrohr (3122) zwischen dem Steuerrohr (312) und einem Quer-Zweigrohr (3101) umfasst, das zwischen den beiden Hilfsunterrohren (310) verbunden ist, wobei die Unterrohrabschnitte (314) mit dem Verbindungsrohr (3122) verbunden sind und die Hilfsunterrohre (310) rückwärtig verlaufen, an zwei Seiten des Motorradkörpers, um mit Vorderendenabschnitten (315a) der waagrechten Rohrabschnitte (315) verbunden zu sein, und die Treibstoffeinfüllöffnung (41) des Kraftstoffbehälters (4) befindet sich unterhalb des Quer-Zweigrohrs (3101) und ist in dem Aufnahmeraum (B) angebracht, der von den Hilfsunterrohren (310) definiert ist.

2. Struktur eines rollerartigen Motorrads (3) nach Anspruch 1, wobei das Steuerrohr (312) ein oberes Ende hat, von dem zwei Seiten jeweils mit Kupplungsrohren (3121) ausgestattet sind, um ein Hauptschaltschloss zu montieren.

3. Struktur eines rollerartigen Motorrads (3) nach Anspruch 2, wobei die Hilfsunterrohre (310) jeweils zwischen Unterseiten der Kupplungsrohre (3121) des Steuerrohrs (312) und den Unterrohrabschnitten (314) positioniert sind.

4. Struktur eines rollerartigen Motorrads (3) nach Anspruch 1 oder 3, wobei erste Stützrohre (3102) und zweite Stützrohre (3103) zwischen den Hilfsunterrohren (310) und den Unterrohrabschnitten (314) montiert sind.

5. Struktur eines rollerartigen Motorrads (3) nach Anspruch 1 oder 3, wobei die Hilfsunterrohre (310) untere Abschnitte (310b) aufweisen, deren Enden aus dem Motorradkörper heraus gebogen und mit den waagrechten Rohrabschnitten (315) verbunden sind.

6. Struktur eines rollerartigen Motorrads (3) nach Anspruch 1, wobei die Abdeckung (36) ein vorderes Abdeckelement (36a) umfasst, das an einer Vorderseite des rollerartigen Motorrads (3) angeordnet ist, sowie Seiten-Abdeckelemente, (36b), wobei das vordere Abdeckelement (36a) einen Knieschutz (361) und eine Vorderplatte (362) umfasst, wobei der Knieschutz (361) zwei Seitenteile umfasst, die die vorderen Staukästen (363) bilden, die nach hinten gewandt sind.

7. Struktur eines rollerartigen Motorrads (3) nach Anspruch 6, wobei die Treibstoffeinfüllöffnung (41) des Kraftstoffbehälters (4) in dem Knieschutz (361) gebildet ist, unterhalb der vorderen Staukästen (363), wobei die Treibstoffeinfüllöffnung (41) des Kraftstoffbehälters (4) auf dem Knieschutz (361) angeordnet ist, um ein umgekehrtes Dreieck mit den vorderen Staukästen (363) zu bilden.

8. Struktur eines rollerartigen Motorrads (3) nach Anspruch 1, wobei ein Hinterrahmen (317) sich von den Steigrohrabschnitten (316) nach hinten erstreckt.

## Revendications

1. Structure de motocyclette du type scooter (3), comprenant un cadre (31), une roue avant (32), un siège (33), des espaces de rangement avant (363), un moteur (34), une roue arrière (35), et un capot (36), où le cadre (31) comprend un guidon de direction (311), un tube de direction (312), et un amortisseur avant (313), des sections de tubes inférieurs (314) s'étendant vers l'arrière du tube de direction (312), deux sections de tubes horizontaux (315) s'étendant vers l'arrière des sections de tubes inférieurs (314) et étant placées des deux côtés d'un corps de scooter, un réservoir à carburant (4) étant disposé entre les deux sections de tubes horizontaux (315) et ayant une ouverture de remplissage du carburant (41), des sections de tubes supérieurs (316) s'étendant vers l'arrière des sections de tubes horizontaux (315), la structure (31) comprenant des tubes inférieurs auxiliaires (310) disposés vers l'arrière des sections de tubes inférieurs (314) où les tubes inférieurs auxiliaires (310) sont au nombre de deux, les tubes inférieurs auxiliaires (310) ayant des extrémités supérieures (310a) reliées au tube de direction (312) et les tubes inférieurs auxiliaires (310) formant entre les deux un espace de réception (B);
**caractérisé en ce que** la structure (31) comprend en outre un tube de connexion (3122) monté entre le tube de direction (312) et un tube de branchement transversal (3101) qui est connecté entre les deux tubes inférieurs auxiliaires (310), où les sections de tubes inférieurs (314) sont reliées au tube de connexion (3122), les tubes inférieurs auxiliaires (310) étant disposés afin de s'étendre vers l'arrière, des deux côtés du corps de scooter, pour être connectés à des sections d'extrémité avant (315a) des sections de tubes horizontaux (315) et l'ouverture de remplissage du carburant (41) du réservoir à carburant (4) est située sous le tube de branchement transversal (3101) et est disposée dans l'espace de réception (B) défini par les tubes inférieurs auxiliaires (310).

2. Structure de motocyclette du type scooter (3) selon la revendication 1, où le tube de direction (312) a une extrémité supérieure dont les deux côtés sont respectivement pourvus de tubes d'accouplement (3121), qui sont prévus pour le montage d'un interrupteur de verrouillage à combinaison.

3. Structure de motocyclette du type scooter (3) selon la revendication 2, où les tubes inférieurs auxiliaires (310) sont situés respectivement entre les bords inférieurs des tubes d'accouplement (3121) du tube de direction (312) et les sections de tubes inférieurs (314).

4. Structure de motocyclette du type scooter (3) selon la revendication 1 ou 3, où les premiers tubes de support (3102) et les deuxièmes tubes de support (3103) sont montés entre les tubes inférieurs auxiliaires (310) et les sections de tubes inférieurs (314).

5. Structure de motocyclette du type scooter (3) selon la revendication 1 ou 3, où les tubes inférieurs auxiliaires (310) ont des sections inférieures (310b) dont les extrémités sont incurvées vers l'extérieur du corps de scooter et reliées aux sections de tubes horizontaux (315).

6. Structure de motocyclette du type scooter (3) selon la revendication 1, où le capot (36) comprend un membre de capot avant (36a) disposé sur une face avant de la motocyclette du type scooter (3) et des membres de capot latéral (36b), le membre de capot avant (36a) comprenant un protecteur de genoux (361) et un panneau avant (362), le protecteur de genoux (361) ayant deux parties latérales formant respectivement les espaces de rangement avant (363) dirigés vers l'arrière.

7. Structure de motocyclette du type scooter (3) conformément à la revendication 6, où l'ouverture de remplissage du carburant (41) du réservoir à carburant (4) est formée dans le protecteur de genoux (361) afin d'être placé sous les espaces de rangement avant (363), l'ouverture de remplissage du carburant (41) du réservoir à carburant (4) étant disposée sur le protecteur de genoux (361) pour former un triangle inversé avec les espaces de rangement avant (363).

8. Structure de motocyclette du type scooter (3) selon la revendication 1, où un cadre arrière (317) s'étend vers l'arrière à partir des sections de tubes supérieurs (316).
